# EUROPEAN PATENT APPLICATION

(11) **EP 2 631 877 A2**
(43) Date of publication of application: **28.08.2013**
(21) Application number: 13000799.0
(22) Date of filing: 15.02.2013
(51) Int. Cl.: G06T 17/20

(54) **Mesh generating apparatus and method**

(30) Priority: 24.02.2012 JP 2012038429
(71) Applicant: Canon Kabushiki Kaisha, Ohta-ku Tokyo (JP)
(72) Inventor: Takama, Yasufumi, Tokyo (JP); Ishikawa, Ryo, Tokyo (JP)
(74) Representative: Weser, Wolfgang

(57) **Abstract**

A mesh generating apparatus comprises a first generating unit that generates a first mesh having grid cells for a region corresponding to an object in an image of the object, a first determining unit that determines distances among corresponding points which correspond to points on the grid cells on a boundary of the region based on a length of the boundary and on the number of points on the grid cells on an outer frame of the first mesh, a second determining unit that determines the corresponding points based on the distances and on a part of the points on the grid cells, the part being located on the boundary of the region, and a second generating unit that generates a second mesh from the first mesh based on the corresponding points and on the points on the grid cells, the second mesh corresponding to the region.

## Description

### BACKGROUND OF THE INVENTION

### Field of the Invention

The present invention relates to a mesh generating apparatus that generates a mesh of an arbitrary region of an image, and more particularly, to an apparatus and method that generate a mesh by transforming surface nodes of an initial mesh so as to conform to a shape of an arbitrary region.

### Description of the Related Art

When forces acting on an object and transformation thereof are simulated using a finite element method, it is necessary to represent the object with a mesh made up of a finite number of elements. Particularly, in the medical field, in order to simulate an incision and transformation of the breasts or a soft organ with high accuracy, there is demand to generate a mesh without significant distortion in such regions of a medical image. Examples of three-dimensional meshes generated include a tetrahedral mesh made up of tetrahedral elements and a hexahedral mesh made up of hexahedral elements. It is known that in the finite element method, hexahedral mesh generally has higher analysis accuracy and requires a shorter analysis time than a tetrahedral mesh. Methods for generating hexahedral meshes include a mapping method disclosed in Japanese Patent Application Laid-Open No. 2002-251415 and an element filling method disclosed in Japanese Patent Application Laid-Open No. 2004-110212. The mapping method involves transforming nodes (surface nodes) located on a surface of an initial mesh so as to conform to a boundary shape and thereby generating a mesh of a region. The initial mesh is obtained by dividing an outer frame model which includes the region by plural elements. The element filling method involves filling a region with elements, filling up gaps between the elements and boundary with new elements, and thereby generating a mesh.

### SUMMARY OF THE INVENTION

However, in the conventional example described in Japanese Patent Application Laid-Open No. 2002-251415, i.e., the example which uses the mapping method, it is necessary to create plural outer frame models which include a region in the case of a complex shape containing a concave shape. In order to combine the outer frame models appropriately, user intervention is needed, requiring a great deal of time and making automation difficult. Also, the conventional example disclosed in Japanese Patent Application Laid-Open No. 2004-110212, i.e., the example which uses the element filling method, has a problem in that distorted mesh elements are generated around region boundaries.

The present invention has been made in view of the above problems and has an object to provide a processing mechanism for automatically dividing an arbitrary region into a mesh free of significant distortion.

In order to solve the above problems, the present invention provides a mesh generating apparatus comprising: a first mesh generating unit configured to generate a first mesh having a plurality of grid cells for a region corresponding to a target object in an image of the target object; a distance determining unit configured to determine distances among a plurality of corresponding points which correspond to points on the plurality of grid cells on a boundary of the region based on a length of the boundary and based on the number of points on the plurality of grid cells on an outer frame of the first mesh; a corresponding point determining unit configured to determine the plurality of corresponding points based on the distances and based on a part of the points on the plurality of grid cells, wherein the part of the points are located on the boundary of the region; and a second mesh generating unit configured to generate a second mesh from the first mesh based on the plurality of corresponding points and based on the points on the plurality of grid cells, the second mesh corresponding to the region.

The present invention provides a mechanism for determining locations of plural corresponding points for each of nodes located on a surface of an initial mesh which approximates a target region, where the locations are determined on a boundary of the region according to distances between the node and corresponding points. By transforming the initial mesh based on the corresponding points, a mesh of an arbitrary region can be generated without generating significantly distorted mesh elements even around a region boundary.

Further features of the present invention will become apparent from the following description of exemplary embodiments with reference to the attached drawings.

### BRIEF DESCRIPTION OF THE DRAWINGS

FIGS. 1A, 1B, 1C and 1D are schematic diagrams illustrating the effect of mesh generation according to a first embodiment.

FIG. 2 is a diagram illustrating an equipment configuration of a mesh generating apparatus 2 according to the first embodiment.

FIG. 3 is a diagram showing a configuration of equipment connected to the mesh generating apparatus 2 according to the first embodiment.

FIG. 4 is a flowchart showing processing procedures of the mesh generating apparatus 2 according to the first embodiment.

FIGS. 5A and 5B are schematic diagrams showing a boundary between a tomographic image and a region according to the first embodiment.

FIGS. 6A, 6B and 6C are schematic diagrams showing a method for generating an initial mesh according to the first embodiment.

FIG. 7 is a schematic diagram showing a method for laying out corresponding points based on geodesic distances according to the first embodiment.

FIG. 8 is a schematic diagram showing a method for laying out corresponding points based on linear distances according to a second embodiment.

FIG. 9 is a flowchart showing processing procedures of a mesh generating apparatus 2 according to a third embodiment.

FIG. 10 is a schematic diagram showing a volume image of the breasts according to the third embodiment.

FIG. 11 is a schematic diagram showing feature points and boundaries of the breasts according to the third embodiment.

FIG. 12 is a diagram showing correspondence between surface nodes and feature points of the breasts according to the third embodiment.

### DESCRIPTION OF THE EMBODIMENTS

Preferred embodiments of the present invention will now be described in detail in accordance with the accompanying drawings.

Exemplary embodiments of a mesh generating apparatus according to the present invention will be described in detail below with reference to the accompanying drawings. However, the scope of the present invention is not limited to the illustrated embodiments.

<First embodiment> (Equalizing geodesic distances)
According to the present embodiment, the mesh generating apparatus is intended to generate a mesh of a region corresponding to a target object in an image (e.g., a volume image) of the target object. The mesh is a grid made up of plural elements (cells) substantially equal in size. Therefore, first the mesh generating apparatus prepares a coarse mesh for a region in the image as with the method described in Japanese Patent Application Laid-Open No. 2002-251415. Hereinafter the coarse mesh will also be referred to as an initial mesh (first mesh). Also, on a boundary of the region in the image, the mesh generating apparatus determines plural corresponding points which correspond to points (surface nodes) of the grid on an outer frame of the initial mesh. Then, the mesh generating apparatus transforms the initial mesh such that the surface nodes in the initial mesh will substantially coincide with the plural corresponding points. Consequently, a mesh (second mesh) which approximates the region can be generated.

The apparatus according to the present embodiment determines locations of adjacent corresponding points based on distances, along the boundary of the region, from the grid points on the boundary of the region (points which substantially fall on the boundary) out of the grid points on the outer frame of the initial mesh. The distance is referred to as a geodesic distance and is obtained by dividing the length of the boundary by the number of grid cells. Consequently, a mesh can be generated without significant distortion even around the region boundary.

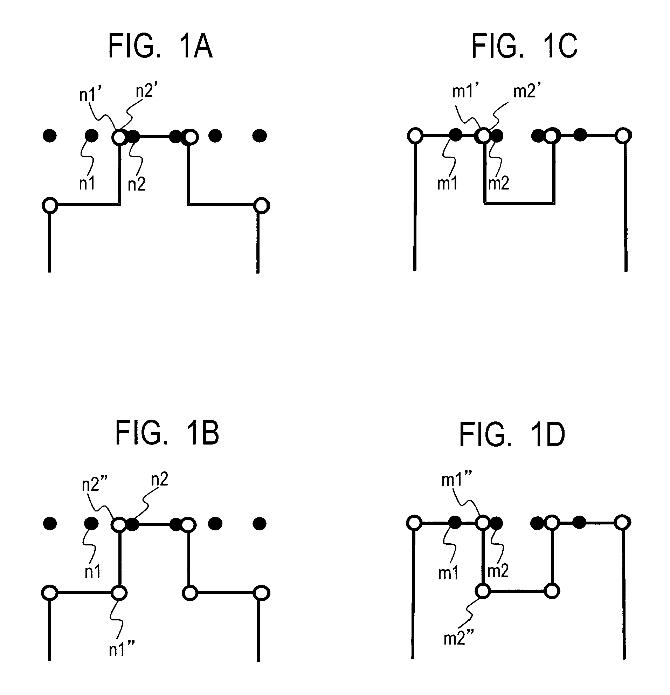

When there is an uneven boundary shape, if corresponding points are established on the boundary at the shortest distance from surface nodes as with the method described in Japanese Patent Application Laid-Open No. 2002-251415, corresponding points n2' and m2' of surface nodes n2 and m2 are set at locations close to n1' and m1', respectively, as shown in FIGS. 1A and 1C. Consequently, the mesh is distorted after a transformation process. According to the present embodiment, for example, by determining the locations of corresponding points such that their geodesic distances will be equal to one another, the interval between corresponding points n1" and n2" are set equal to the interval between corresponding points m1" and m2" as shown in FIGS. 1B and 1D. Consequently, a mesh can be generated without significant distortion even around the region boundary regardless of the boundary shape.

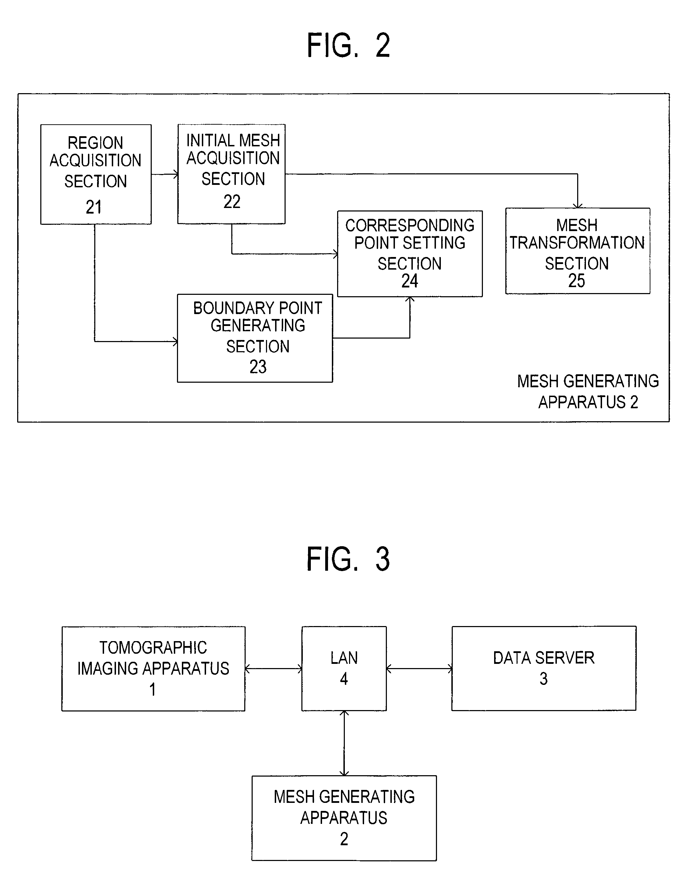

A configuration of the mesh generating apparatus 2 according to the present embodiment is shown in FIG. 2. The mesh generating apparatus 2 includes a region acquisition section 21, an initial mesh acquisition section 22, a boundary point generating section 23, a corresponding point setting section 24, and a mesh transformation section 25.

FIG. 3 is a configuration diagram of equipment connected to the mesh generating apparatus 2 according to the present embodiment. As shown in FIG. 3, the mesh generating apparatus 2 is connected with a tomographic imaging apparatus 1 and data server 3 via a local area network (LAN) 4 such as Ethernet (registered trademark). The tomographic imaging apparatus 1 is designed to produce tomographic images of an object, and examples of the tomographic imaging apparatus 1 include an x-ray CT imaging apparatus (CT) and magnetic resonance imaging apparatus (MRI). Since CT or MRI allows plural tomographic images to be produced by a single imaging scan, if the tomographic images are arranged in sequence, a volume image of an object can be acquired. The volume image is made up of plural voxels, and a single voxel has one or more voxel values. Examples of the voxel value include a CT value. The tomographic imaging apparatus 1 produces tomographic images in response to actions of a user (not shown) and outputs the acquired volume image to the mesh generating apparatus 2. The mesh generating apparatus 2 may be connected to the data server 3 adapted to store the volume images obtained by the tomographic imaging apparatus 1 and may be configured to acquire necessary volume images from the data server 3. The mesh generating apparatus 2 acquires a region of a target object from an input volume image and generates a mesh in the region. The equipment described above may be interconnected via a USB, IEEE 1394, or other interface or may be interconnected via the LAN 4 or an external network such as the Internet.

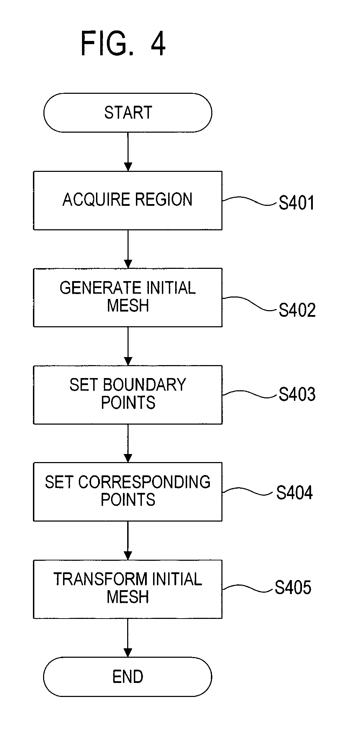

Next, operation of various parts and processing procedures of the mesh generating apparatus 2 according to the present embodiment will be described with reference to a flowchart in FIG. 4.

### <Step S401>

In Step S401, the region acquisition section 21 acquires a volume image from the tomographic imaging apparatus 1 or data server 3. Then, the region acquisition section 21 acquires region information about a target object from the volume image and outputs the region information to the initial mesh acquisition section 22 and boundary point generating section 23.

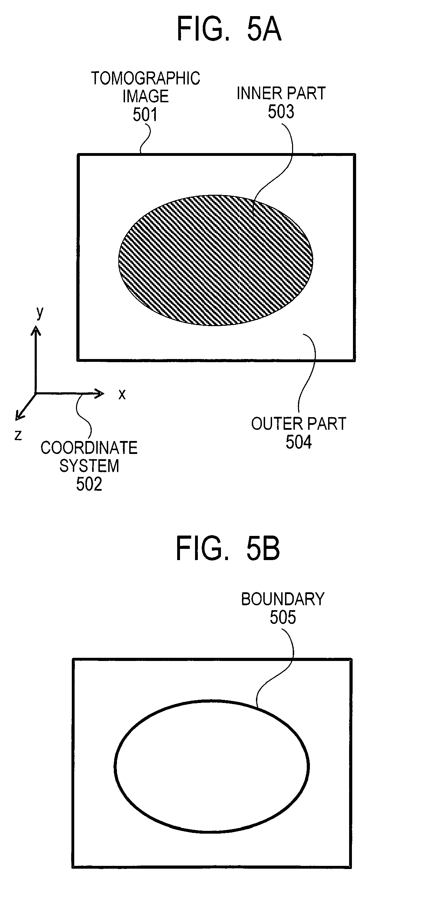

The region acquisition section 21 may acquire the region information using any known method. For example, locations of voxels making up a surface of the object may be acquired as a region boundary from the individual tomographic images of the volume image and designated as the region information. A concrete example of this process will be described with reference to FIGS. 5A and 5B. FIG. 5A is a schematic diagram of a tomographic image 501 which, being produced by the tomographic imaging apparatus 1, makes up a volume image. It is assumed that locations of pixels making up the tomographic image 501 have been defined in a coordinate system 502. The tomographic image 501 shows regions in inner part 503 and outer part 504 of an object. FIG. 5B is a schematic diagram showing a boundary 505 between the inner part 503 and outer part 504 of the object as acquired from the tomographic image 501. Possible methods for acquiring the boundary 505 include, for example, a method which involves applying thresholding to the voxel values of the tomographic image 501 in terms of magnitudes of their slopes and defining the boundary by locations of the voxels having values larger than a threshold. The method for acquiring the boundary is not limited to this, and any known method may be used.

### <Step S402>

In Step S402, the initial mesh acquisition section 22 (first mesh generating unit) receives boundary information about the region from the region acquisition section 21 and generates an initial mesh. Then, the initial mesh acquisition section 22 outputs the generated initial mesh to the corresponding point setting section 24 and mesh transformation section 25 (second mesh generating unit).

Generally, a mesh is represented by a set of nodes and mesh elements. The nodes have coordinates and are managed based on node IDs. When a node ID is specified, a node is determined uniquely. The mesh element has four node IDs in the case of a tetrahedron, and eight node IDs in the case of a hexahedron and are managed based on a mesh element ID. When a mesh element ID is specified, a mesh element is determined uniquely. According to the present embodiment, each of the nodes (surface nodes) located on the surface of the initial mesh also contains information which indicates that the node is a surface node.

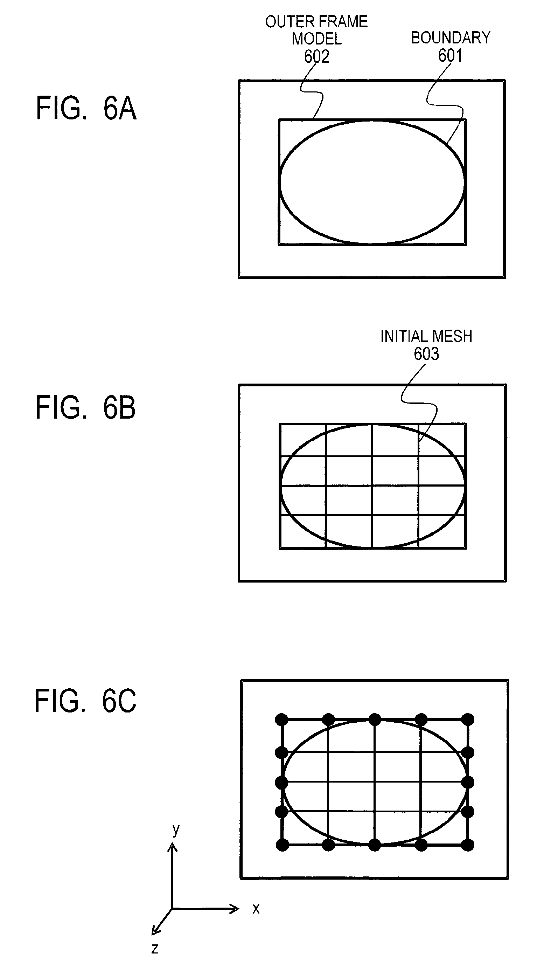

A concrete example of the process of generating an initial mesh will be described with reference to FIGS. 6A to 6C. Incidentally, although FIGS. 6A to 6C are shown in a two-dimensional form for simplicity of illustration, the actual process is a three-dimensional process. FIG. 6A is a schematic diagram showing an acquired region boundary 601 and an outer frame model 602 surrounding the boundary 601. First, the initial mesh acquisition section 22 generates an outer frame model 602 of the region boundary 601. For example, a hexahedron which includes the region 601 is generated as the outer frame model 602. Next, the initial mesh acquisition section 22 divides the outer frame model 602 into a grid-like structure and thereby generates an initial mesh 603. Then, out of the nodes making up the initial mesh 603, the initial mesh acquisition section 22 adds information indicating a surface node to each of the nodes located on the surface of the outer frame model 602 (i.e., on the sides and faces of the hexahedron). For example, when an initial mesh such as shown in FIG. 6B is given, surface nodes are given by black dots shown in FIG. 6C.

### <Step S403>

In Step S403, the boundary point generating section 23 receives the boundary information about the region from the region acquisition section 21 and generates a boundary point list to store coordinates of boundary points along the boundary for each of the tomographic images of the volume image. Then, the boundary point generating section 23 outputs the generated list to the corresponding point setting section 24.

A concrete example of generating a boundary point list will be described. First, in relation to one tomographic image, one voxel is selected from the boundary information acquired in Step S401 and set at the top of the boundary point list. Then, coordinates of the last element in the boundary point list is selected as starting coordinates. Then, the boundary information is searched for a voxel which minimizes inter-coordinate distance from the starting coordinates, and the location of the retrieved voxel is set to a next element in the boundary point list. A similar process is repeated until all the voxels are set, thereby generating a boundary point list in which the elements are arranged along the boundary. The process is repeated for all the tomographic images, thereby generating a boundary point list of voxels located on the boundary.

### <Step S404>

In Step S404, the corresponding point setting section 24 calculates a location on the region boundary to which each surface node of the initial mesh is to be moved as a result of mesh transformation and designates the location as a corresponding point of the node. Then, the corresponding point setting section 24 generates a corresponding point list storing corresponding points which correspond to the surface nodes and outputs the list to the mesh transformation section 25.

In the present embodiment, description will be given of a method for setting corresponding points so as to equalize geodesic distances between adjacent corresponding points in order to generate a mesh without any significant distortion around a boundary. Incidentally, in the present embodiment, description will be given of a case in which the surface nodes of an initial mesh are grouped (surface node groups in two-dimensional planes are organized) per plane parallel to the tomographic images of a volume image, and a corresponding point setting process is performed for each of the surface node groups.

First, in relation to one surface node group, a tomographic image located in a same plane as the surface node group is selected, and a boundary point list of the tomographic image is acquired from the boundary point generating section 23. Then, the geodesic distance around an entire circumference of the boundary are calculated. The geodesic distance can be found as the sum total of distances between the coordinates of adjacent elements in the boundary point list. Then, the geodesic distance is divided by the number of surface nodes to calculate a corresponding-point distance d. Then, one of the boundary points is selected for one surface node as a corresponding point and set in the corresponding point list. For example, a combination of a surface node and boundary point with the smallest distance therebetween is found and the boundary point is selected as a corresponding point of the surface node. Then, based on the corresponding-point distance d found above and geodesic distance between boundary points, the coordinates of the corresponding points of all the remaining surface nodes are calculated.

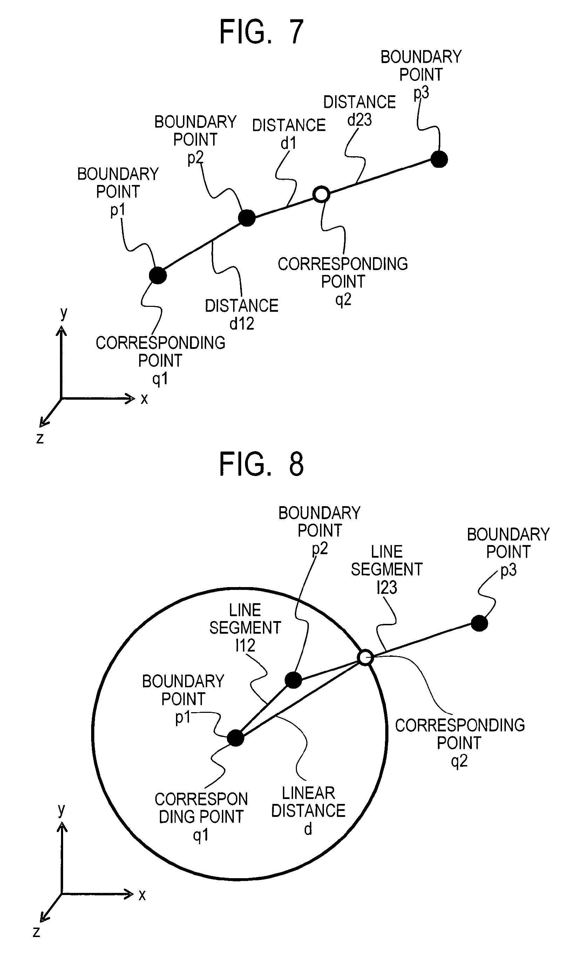

Now, a method for calculating the coordinates of the corresponding points based on the corresponding-point distance d and the geodesic distance between boundary points will be described with reference to FIG. 7. FIG. 7 is a schematic diagram showing boundary points p1, p2, and p3 and distances d12 and d23 therebetween, stored in each element of the boundary point list, as well as a distance d1 (set in a subsequent process) between a corresponding point q2 and the boundary point p2. The boundary point p1 is also a corresponding point q1 which corresponds to the first surface node. In a subsequent process, the corresponding point q2 is set at a location whose geodesic distance from q1 along the boundary is equal to the corresponding-point distance d. First, it is determined whether the corresponding-point distance d is shorter than d12. If d is shorter than d12, the corresponding point q2 is located between the boundary points p1 and p2, and thus the coordinates of the corresponding point q2 is calculated from p1 and p2 by linear interpolation. On the other hand, if d is longer than d12, it is determined whether d is shorter than the sum of d12 and d23 (i.e., the geodesic distance between p1 and p3). If d is shorter than the sum of d12 and d23 (as shown in FIG. 7), the corresponding point q2 is located between the boundary points p2 and p3, and thus the coordinates of the corresponding point q2 is calculated from the distances d1 and d23 as well as the coordinates of the boundary points p2 and p3 by linear interpolation. The distance d1 is calculated by subtracting the distance d12 from the corresponding-point distance d. On the other hand, if d is longer than the sum of d12 and d23, the distances to the next element in the boundary point list are added in sequence (i.e., the geodesic distance from q1 is calculated). When the sum exceeds the corresponding-point distance, a linear interpolation process similar to the one described above is performed, thereby calculating the coordinates of the corresponding point q2 (such that the geodesic distance from q1 will coincide with the corresponding-point distance). Then, the calculated coordinates are set in the corresponding point list as a corresponding point of the second surface node. Furthermore, the next corresponding point (q3) is similarly set to a location whose geodesic distance from q2 is equal to the corresponding-point distance d. By repeating this process, the corresponding points of all the surface nodes are set in sequence. As a result of the above process, corresponding points are set for the surface node group in one plane such that their geodesic distances on the region boundary will be equal in the plane. The term "equal" means not only cases in which intervals are strictly equal, but also cases in which intervals are substantially equal (with some deviations).

When the above process is repeated for all the surface node groups, corresponding points are set for all the surface nodes in the initial mesh.

### <Step S405>

In Step S405, the mesh transformation section 25 receives the initial mesh and the corresponding point list and transforms the initial mesh such that the surface nodes in the initial mesh will coincide with the corresponding points. The mesh which has undergone the transformation process is designated as a mesh of an arbitrary region. The process of transforming the initial mesh such that the coordinates of the surface nodes in the initial mesh will match the coordinates of the corresponding points thereafter can be implemented by an existing transformation simulation technique based on, for example, the finite element method.

With the configuration described above, corresponding points of the surface nodes in the initial mesh are set at equal intervals on the boundary based on the geodesic distances along the boundary shape of an arbitrary region. Consequently, node locations on the mesh of an arbitrary region generated by transforming the initial mesh are also arranged at equal intervals. Thus, a mesh can be generated without significant distortion of mesh elements even around the region boundary.

### <Second embodiment> (Using linear distances)

In Step S404 according to the first embodiment, the corresponding point setting section 24 determines the locations of corresponding points using the geodesic distances between boundary points. However, the method for determining the locations of corresponding points is not limited to the methods which use the geodesic distances between boundary points, and the distances between boundary points defined by another method may be used. For example, the locations of corresponding points may be determined using linear distances between boundary points. According to the present embodiment, the corresponding point setting section 24 determines the coordinates of corresponding points using the linear distances between boundary points.

A configuration and process flowchart of the mesh generating apparatus 2 according to the present embodiment is similar to the first embodiment except for the following points. That is, part of the process (the process of setting corresponding points for each surface node group) performed by the corresponding point setting section 24 in Step S404 is different from the first embodiment. The difference will be described below with reference to FIG. 8.

FIG. 8 is a schematic diagram showing boundary points p1, p2, and p3 stored in each element of the boundary point list and a corresponding point q2 set (in a subsequent process) at a location separated from the corresponding point q1 by the corresponding-point distance d in terms of linear distance. The boundary point p1 is also a corresponding point q1 which corresponds to the first surface node. First, as in the case of the first embodiment, one of the boundary points is selected for one surface node as a corresponding point and set in the corresponding point list. Next, in order to determine a location of the corresponding point q2 separated from the corresponding point q1 by a linear distance of d, an intersection point between a circle of radius d with a center at the corresponding point q1 and a line segment (line segments 112 and 123 in the example of FIG. 8) linking adjacent boundary points is calculated. Then, the intersection point (intersection point between the circle and line segment 123 in the example of FIG. 8) is set as the corresponding point q2 in the corresponding point list. Incidentally, for example, the quotient obtained by dividing the outer frame model by the number of surface nodes on the initial mesh may be used as the corresponding-point distance d. Furthermore, a next corresponding point (q3) is similarly set using a circle of radius d with a center at q2. By repeating this process, the corresponding points of all the surface nodes are set in sequence. As a result of the above process, corresponding points are set for the surface node group in one plane such that their linear distances will be equal to one another in the plane, and are established on the region boundary. The term "equal" means not only cases in which intervals are strictly equal, but also cases in which intervals are substantially equal (with some deviations).

Incidentally, when linear distance is used, there may be cases in which a linear distance dl between the last corresponding point and first corresponding point does not match d. Thus, if d is longer than dl, the locations of corresponding points may be recalculated beginning with the corresponding point q2 as follows: the difference between dl and d is divided by the number of surface nodes, the quotient is added to d, and the distance thus obtained is used as a new corresponding-point distance d for use in the recalculation. Similarly, if d is shorter than dl, the locations of corresponding points may be recalculated beginning with the corresponding point q2 as follows: the difference between dl and d is divided by the number of surface nodes, the quotient is subtracted from d, and the distance thus obtained is used as a new corresponding-point distance d for use in the recalculation. If the calculations are repeated until dl matches d, corresponding points can be set so as to approximate the boundary by equal linear distances.

### <Third embodiment> (Example of generating mesh of breasts)

A mesh generating apparatus according to the present embodiment sets corresponding points of the surface nodes in the initial mesh by taking into consideration locations of feature points in a target region as a condition other than the distances between boundary points and generates a mesh based on the corresponding points set in this way. In the present embodiment, description will be given by citing as an example a medical mesh generating apparatus which uses a volume image of the breasts of an examinee as a process object, acquires both left and right nipple locations and outer end locations of the breasts as feature points, and generates a mesh of a breast region by taking these locations into consideration.

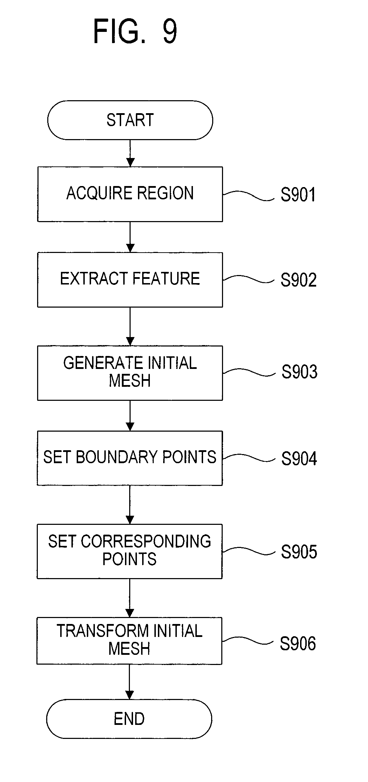

A configuration of the mesh generating apparatus 2 according to the present embodiment is similar to the first embodiment. Operation of various parts and processing procedures of the mesh generating apparatus 2 according to the present embodiment will be described below with reference to a flowchart in FIG. 9.

### <Step S901>

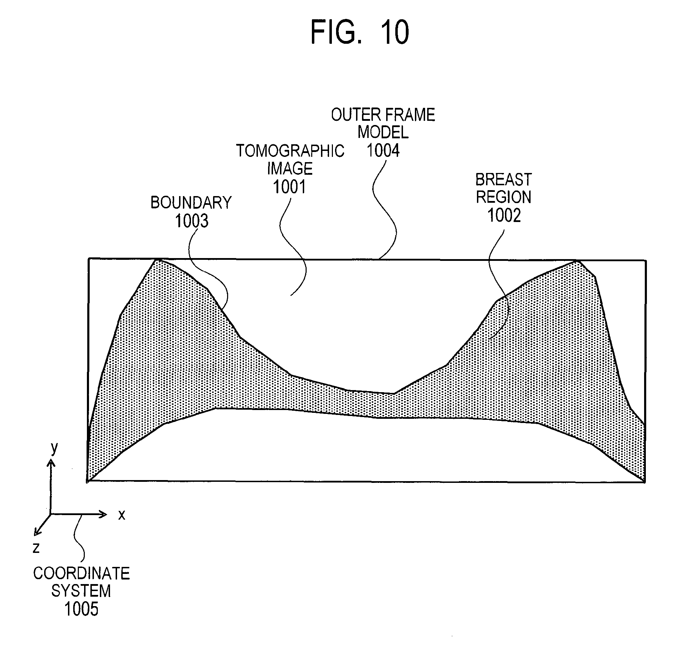

Step S901 is a process similar to Step S401 according to the first embodiment. That is, in Step S901, the region acquisition section 21 acquires a volume image of the breasts and acquires a breast region 1002 and boundary 1003 from a tomographic image 1001 of the breasts as shown in the schematic diagram of FIG. 10.

### <Step S902>

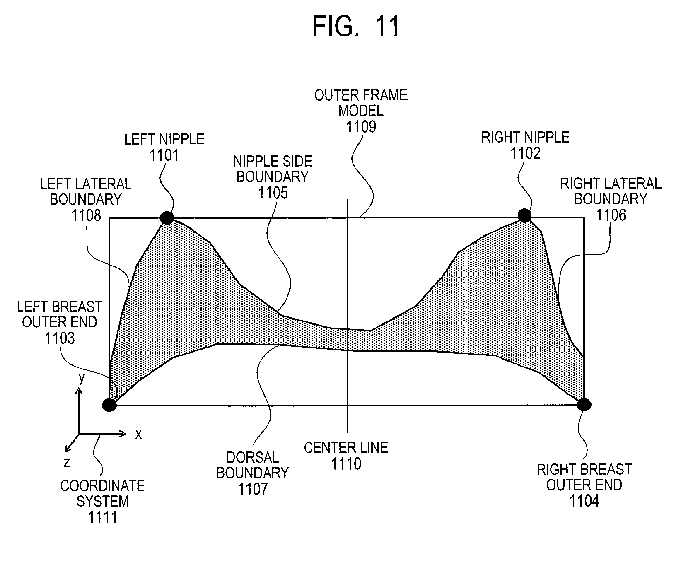

In Step S902, the region acquisition section 21 extracts predetermined feature points in the breast region from the volume image of the breasts. Then, the region acquisition section 21 outputs information about the acquired feature points to a boundary point generating section 23. As shown in the schematic diagram of FIG. 11, the feature points used in the present embodiment include a left nipple 1101, a right nipple 1102, a left breast outer end 1103 contained in each tomographic image, and a right breast outer end 1104 contained in each tomographic image. The volume image of the breasts uses a coordinate system 1111 shown in FIG. 11.

First, the process of extracting the left and right nipples from an entire volume image will be described. First, the breast region extracted in Step S901 is divided into left and right regions. Since the breasts are almost bilaterally symmetrical, a center line 1110 which divides a side of an outer frame model 1109 along an X axis into two parts is calculated, and a breast region to the left of the center line is designated as a left region and a breast region to the right of the center line is designated as a right region. Next, regarding the entire volume image of the breasts, coordinates with the largest Y coordinate are extracted from each of the left and right regions. Then, the coordinates extracted from the left region are determined to be those of the left nipple 1101 and the coordinates extracted from the right region are determined to be those of the right nipple 1102.

Next, Z coordinates of the left and right nipple locations are compared, and if the difference thus found is smaller than a predetermined value, a plane which contains both nipple locations and is parallel to a Y axis is found and information thereon is held as information about a nipple cross section. As the predetermined value used in the above determination, for example, division intervals used in generation of an initial mesh in Step S903 next may be adopted.

Each of the left and right nipples is contained only in a single tomographic image. Regarding other tomographic images, a boundary point which has the same X coordinate as a given nipple and has the largest Y coordinate is extracted as a provisional nipple location in a given tomographic image.

Finally, breast outer ends are extracted from each tomographic image. In the left region, coordinates of a voxel which has the smallest X coordinate and the smallest Y coordinate are determined to correspond to the left breast outer end 1103. In the right region, coordinates of a voxel which has the largest X coordinate and the smallest Y coordinate are determined to correspond to the right breast outer end 1104. This process is repeated for each tomographic image to extract the breast outer ends from every tomographic image. Incidentally, any other appropriate process may be used to extract the nipples and breast outer ends.

### <Step S903>

In Step S903, the initial mesh acquisition section 22 generates an initial mesh of the region from an outer frame model 1004 as in the case of Step S402 according to the first embodiment. However, according to the present embodiment, an initial mesh is generated using the method of Step S402 and then node locations in the initial mesh are adjusted based on the nipple locations found in Step S902.

First, nodes in the initial mesh generated using the method of Step S402 are grouped per plane parallel to the tomographic images. Then, if a nipple cross section has been set in Step S902 (if the difference between the Z coordinates of the left and right nipple locations is smaller than the predetermined value), the process described below is performed. First, the node group nearest to the nipple cross section is selected from among the node groups resulting from the grouping, as a node group which represents the nipple cross section. For example, the node group in the plane closest to the Z-coordinate average value of the left and right nipples is selected. Then, the Z coordinate of each node contained in the selected node group is corrected so as to be located in the nipple cross section.

On the other hand, if a nipple cross section has not been set in Step S902 (if the difference between the Z coordinates of the left and right nipple locations is larger than the predetermined value), the process described below is performed. First, the node group in the plane nearest to the Z coordinate of the right nipple location is selected from among the node groups resulting from the grouping, as a node group which represents a tomographic image of the right nipple. Then, the Z coordinate of each node contained in the selected node group is corrected to the Z coordinate of the right nipple location. A similar process is performed with respect to the left nipple (by selecting another node group).

As a result of the above process, the initial mesh is assigned to the same plane as the tomographic images (or nipple cross section) containing the nipple locations. Consequently, nodes in a region mesh generated finally are assigned to the nipple locations.

### <Step S904>

In Step S904, the boundary point generating section 23 generates a boundary point list storing the coordinates of boundary points along the boundaries of the breasts for each tomographic image of the volume image. The method for generating the boundary point list is similar to the process of Step S403, but the present embodiment differs in that the voxel of the left nipple location (or provisional left nipple location) is set at the top of the boundary point list. After the voxel of the left nipple location is set at the top of the boundary point list, the rest of the process is similar to Step S403. If the nipple cross section of the initial mesh has been corrected in Step S903, the boundary point list of the nipple cross section is generated similarly.

### <Step S905>

In Step S905, the corresponding point setting section 24 generates a list of corresponding points on the region boundary to move the surface nodes in the initial mesh to, and outputs the list to the mesh transformation section 25. The corresponding point setting section 24 according to the present embodiment sets corresponding points not only by giving consideration to uniformity of distances among boundary points, but also by using information about the locations of feature points. According to the present embodiment, the process of setting corresponding points is performed with respect to each surface node group set up by extracting surface nodes from the node groups established as a result of grouping in Step S903.

First, as in the case of Step S404, a boundary point list of the tomographic image located on the same plane as a surface node group of interest is acquired. However, if the surface node group represents a nipple cross section, a boundary point list of the nipple cross section is acquired. Then, as shown in FIG. 11, the boundary between the left nipple 1101 and right nipple 1102 is defined as a nipple side boundary 1105 while the boundary between the left breast outer end 1103 and right breast outer end 1104 is defined as a dorsal boundary 1107. Furthermore, the boundary between the right nipple 1102 and right breast outer end 1104 is defined as a right lateral boundary 1106 while the boundary between the left nipple 1101 and left breast outer end 1103 is defined as a left lateral boundary 1108. If any of the nipples are not contained in the tomographic image, the provisional nipple location(s) described above is (are) used.

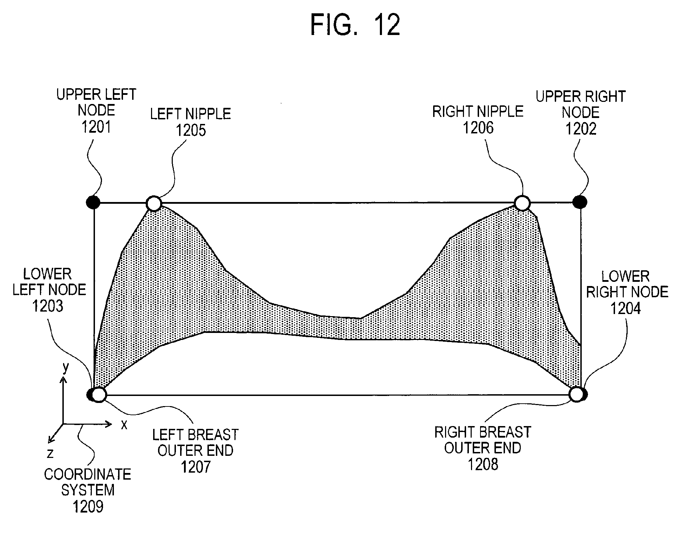

Next, as shown in FIG. 12, a boundary point located on the left nipple 1205 is set as a corresponding point of an upper left node (a surface node located at upper left) 1201 of the initial mesh. Similarly, the right nipple 1206 is set as a corresponding point of an upper right node 1202, a left breast outer end 1207 is set as a corresponding point of a lower left node 1203, and a boundary point located at a right breast outer end 1208 is set as a corresponding point of a lower right node 1204. Then, the corresponding points of the nodes are set such that the surface node group of the initial mesh located on an upper plane of the outer frame model will move to the nipple side boundary 1105 after mesh transformation. In so doing, the coordinates of each corresponding point are calculated such that all the geodesic distances between corresponding points will equal the corresponding-point distance d (equal among themselves), where the corresponding-point distance d is the quotient obtained by dividing the geodesic distance of the nipple side boundary 1105 by the number of nodes. Furthermore, the corresponding points are set similarly such that the surface nodes located on a right plane will fall on the right lateral boundary 1106, that the surface nodes located on a lower plane will fall on the dorsal boundary 1107, and that the surface nodes located on a left plane will fall on the left lateral boundary 1108. In this way, according to the present embodiment, corresponding points can be set at such locations that surface nodes will fall on boundaries in each plane of the outer frame model.

When the above process is repeated for all the surface node groups, corresponding points are set for all the surface nodes in the initial mesh.

### <Step S906>

In Step S906, the mesh transformation section 25 operates in a manner similar to Step S405.

This mode of implementation allows a mesh to be generated such that the node locations on boundaries will be spaced equidistantly wherever practicable and that nodes will be set at locations of feature points of the breasts, such as the nipples and breast outer ends. This is suitable for estimating distortion of a region using feature point locations because mesh nodes are set at feature point locations as well as because of reduced distortion around region boundaries.

Although in the present embodiment, a mesh generating process for a breast region has been described as an example, a similar mesh generating process can be performed even when another region (a volume image of another organ or object) is handled.

### <Fourth embodiment> (Preparing initial mesh using average geometric model)

In the embodiments described above, the initial mesh acquisition section 22 generates an initial mesh using an outer frame model circumscribed on an acquired region. However, the shapes of initial meshes are not limited to this. In the present embodiment, description will be given of a case in which a mesh of an average geometric model of the breasts is used as an initial mesh.

A configuration and process flowchart of the mesh generating apparatus 2 according to the present embodiment is similar to the third embodiment except for the following points. That is, the process performed by the initial mesh acquisition section 22 in Step S903 and part of the process performed by the corresponding point setting section 24 in Step S905 are different from the third embodiment. Only the differences will be described below.

In Step S903, the initial mesh acquisition section 22 acquires an average geometric model of the breasts from the data server 3 and establishes the model as an initial mesh. The average geometric model is obtained by extracting feature points from breast regions, nipples and breast outer ends of plural persons, aligning and matching the feature points, and calculating an average. The method for generating an average geometric model is not limited to this, and any appropriate existing method may be used.

In Step S905, the corresponding point setting section 24 brings the nodes of the nipples and breast outer ends in the average geometric model, which is an initial mesh, into correspondence with those in the boundary point list, and establishes correspondence of the remaining surface nodes such that geodesic distances will be equal to one another.

This mode of implementation allows the shape of an initial mesh to be brought close to the shape of an arbitrary region, thereby reducing the time required for transformation simulations.

### <Other embodiments>

Exemplary embodiments have been described in detail above. Besides, the present invention can be embodied as a system, apparatus, or method. Specifically, the present invention may be applied to a system made up of two or more apparatus or to equipment made up of a single apparatus.

The present invention can also be realized by executing the following process. That is, a process of providing software (a program) which realizes the functions of the above-described embodiments to a system or apparatus via a network or various types of storage media, and a computer (or CPU, MPU or the like) of the system or the apparatus reading out and executing the program code.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A mesh generating apparatus comprising:
first mesh generating means for generating a first mesh having a plurality of grid cells for a region corresponding to a target object in an image of the target object;
distance determining means for determining distances among a plurality of corresponding points which correspond to points on the plurality of grid cells on a boundary of the region based on a length of the boundary and based on the number of points on the plurality of grid cells on an outer frame of the first mesh;
corresponding point determining means for determining the plurality of corresponding points based on the distances and based on a part of the points on the plurality of grid cells, wherein the part of the points are located on the boundary of the region; and
second mesh generating means for generating a second mesh from the first mesh based on the plurality of corresponding points and based on the points on the plurality of grid cells, the second mesh corresponding to the region.

2. The mesh generating apparatus according to claim 1, wherein the corresponding point determining means is configured to determine a point on the boundary of the region out of the points on the plurality of grid cells as a first corresponding point and determine a location separated by the distance from the first corresponding point on the boundary as a second corresponding point adjacent to the first corresponding point.

3. The mesh generating apparatus according to claim 1 or 2, wherein:
the first mesh is an initial mesh;
the second mesh is a new mesh which approximates the region; and
the second mesh generating means is configured to transform the mesh into the new mesh such that the points on the plurality of grid cells on the outer frame of the initial mesh will coincide with the plurality of corresponding points.

4. The mesh generating apparatus according to any one of claims 1 to 3, wherein the distance determining means is configured to determine the distances among the plurality of corresponding points along a curve of the boundary so as to be substantially equal among one another.

5. The mesh generating apparatus according to any one of claims 1 to 3, wherein the distance determining means is configured to determine the distances among the plurality of corresponding points so as to be substantially equal among one another in terms of linear distance.

6. The mesh generating apparatus according to any one of claims 1 to 5, wherein:
the object is a breast; and
the first mesh generating means is configured to generate the first mesh based on a feature of the breast.

7. The mesh generating apparatus according to any one of claims 1 to 6, wherein:
the object is left and right breasts; and
the first mesh generating means is configured to generate the first mesh based on locations of respective nipples and locations of breast outer ends of the left and right breasts.

8. The mesh generating apparatus according to any one of claims 1 to 7, wherein the first mesh generating means is configured to generate a mesh of an average geometric model as the first mesh, the average geometric model representing an average shape of a plurality of geometric models.

9. A mesh generating method comprising:
a first mesh generating step of generating a first mesh having a plurality of grid cells for a region corresponding to a target object in an image of the target object;
a distance determining step of determining distances among a plurality of corresponding points which correspond to points on the plurality of grid cells on a boundary of the region based on a length of the boundary and based on the number of points on the plurality of grid cells on an outer frame of the generated first mesh;
a corresponding point determining step of determining the plurality of corresponding points based on the determined distances and based on a part of the points on the plurality of grid cells, wherein the part of the points are located on the boundary of the region; and
a second mesh generating step of generating a second mesh from the first mesh based on the plurality of determined corresponding points and based on the points on the plurality of grid cells, the second mesh corresponding to the region.

10. The mesh generating method according to claim 9, wherein the corresponding point determining step determines a point on the boundary of the region out of the points on the plurality of grid cells as a first corresponding point and determines a location separated by the distance from the first corresponding point on the boundary as a second corresponding point adjacent to the first corresponding point.

11. The mesh generating method according to claim 9 or 10, wherein:
the first mesh is an initial mesh;
the second mesh is a new mesh which approximates the region; and
the second mesh generating step transforms the mesh into the new mesh such that the points on the plurality of grid cells on the outer frame of the initial mesh will coincide with the plurality of corresponding points.

12. The mesh generating method according to any of claims 9 to 11, wherein the distance determining step determines the distances among the plurality of corresponding points along a curve of the boundary so as to be substantially equal among one another.

13. The mesh generating method according to any of claims 9 to 12, wherein:
the object is a breast; and
the first mesh generating step generates the first mesh based on a feature of the breast.

14. The mesh generating method according to any one of claims 9 to 13, wherein:
the object is left and right breasts; and
the first mesh generating step generates the first mesh based on locations of respective nipples and locations of breast outer ends of the left and right breasts.

15. A computer-readable storage medium storing a computer program that causes a computer to execute the method according to any one of claims 9 to 14.
